(19) Europäisches Patentamt
European Patent Office
Office européen des brevets

(11) EP 4 617 972 A1

(12) EUROPEAN PATENT APPLICATION

(43) Date of publication:
17.09.2025 Bulletin 2025/38

(21) Application number: 24184946.2

(22) Date of filing: 27.06.2024

(51) International Patent Classification (IPC):
G06Q 10/087 (2023.01)      G06Q 30/0201 (2023.01)

(52) Cooperative Patent Classification (CPC):
G06Q 30/0201; G06Q 10/087

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.03.2024 IN 202421019332

(71) Applicant: Tata Consultancy Services Limited
Maharashtra (IN)

(72) Inventors:
• GORE, SURABHI
411006 Pune, Maharashtra (IN)

**Description**

CROSS-REFERENCE TO RELATED APPLICATIONS AND PRIORITY

The present application claims priority to Indian application no. 202421019332 filed on March 15, 2024.

TECHNICAL FIELD

The disclosure herein generally relates to the field of procurement to pay and, more particularly, to a method and system for anomalous price variance based recommendation of alternate buying options.

BACKGROUND

Procurement risks occur when the process of purchasing or sourcing products, services or resources becomes unreliable. There are some commonly known procurement risks, like inaccurate need analysis, inadequate vendor management and sourcing, no supply chain risk management, underdeveloped contract management process, lack of automation and poor procurement planning. In business, the said procurement risk needs to be appropriately managed in supply chain since it can affect the health and revenue of the business. For example, considering a scenario where a purchase order is put in for the raw materials needed to produce widgets, but the goods never arrived. In such scenarios, business may also face risks associated with the procurement process from a vendor or partner, which may be out of their control. One of the biggest challenges that the procure-to-pay domain faces is the purchase of items at sub-optimal price. This could either be a result of intentional practices (for example, procurement frauds) by gaming the system or simply due to the absence of sophisticated methodologies to derive the optimal price. As a result, the organizations face considerable loss with respect to their annual revenue. Since the transactions are involved in large numbers, it becomes even more difficult to identify such procurement frauds. For example, some of the procurement frauds are payoffs and kickbacks, shell companies, bid rigging, credit card fraud, fraudulent invoices and the like.

Conventional statistical tools and Business Intelligence (BI) tools provide analytics reports. However, the analysis is done in silos and hence it lacks a comprehensive view of the core problems associated with procure-to-pay. Further, the conventional methods lack domain knowledge of procure-to-pay and hence do not generate domain-specific insights. Furthermore, the conventional methods only provide observations but do not generate actionable recommendations. Finally, conventional methods are predominantly reactive and neither predictive nor perspective. Hence there is a challenge in developing a predictive model considering a comprehensive view of the core problems and domain specific insights.

SUMMARY

Embodiments of the present disclosure present technological improvements as solutions to one or more of the above-mentioned technical problems recognized by the inventors in conventional systems. For example, in one embodiment, a method for anomalous price variance based recommendation of alternate buying options is provided. The method includes receiving, by one or more hardware processors, a procurement data pertaining to a plurality of items procured in an enterprise, wherein the procurement data is collected in a predefined transaction window, and wherein the procurement data comprises a plurality of features associated with each of the plurality of items. Further, the method includes identifying, by the one or more hardware processors, an influence value, associated with each of the plurality of features pertaining to each of the plurality of items based on the procurement data using an influencer graph. Furthermore, the method includes identifying, by the one or more hardware processors, a degree of impact corresponding to each of the plurality of features based on the influence value associated with each of the plurality of items. Furthermore, the method includes identifying, by the one or more hardware processors, a plurality of highly influential features from among the plurality of features based on an associated degree of impact and a procurement seasonal data using the influencer graph. Furthermore, the method includes identifying, by the one or more hardware processors, a seasonal behaviour associated with each of the plurality of items based on the plurality of highly influential features and the transaction data. Furthermore, the method includes obtaining, by the one or more hardware processors, a plurality of price anomalies associated with each of the plurality of items by comparing a current seasonal price associated with each of the plurality of items with an associated historical price. Furthermore, the method includes identifying, by the one or more hardware processors, a plurality of candidate clustering algorithms from a plurality of clustering algorithms based on a count and a pattern associated with the plurality of price anomalies. Furthermore, the method includes clustering, by the one or more hardware processors, the plurality of items into a plurality of clusters based on the price using the plurality of candidate clustering algorithms. Furthermore, the method includes identifying, by the one or more hardware processors, an optimal cluster from among the plurality of clusters based on a silhouette score associated with each of the plurality of candidate clustering algorithms. Furthermore, the method includes identifying, by the one or more hardware processors, a plurality of anomalous transaction clusters by comparing a base line purchase value with the identified optimal cluster using decision trees. Furthermore, the method includes identifying, by the one or more hardware processors, a plurality of reasons associated with the identified anomalous transaction clusters based on maverick transactions using the decision trees. Finally, the method includes recommending, by the one or more hardware processors, an alternate buying options for a future procurement order based on the identified plurality of reasons.

In another aspect, a system for anomalous price variance based recommendation of alternate buying options is provided. The system includes at least one memory storing programmed instructions, one or more Input /Output (I/O) interfaces, and one or more hardware processors operatively coupled to the at least one memory, wherein the one or more hardware processors are configured by the programmed instructions to receive a procurement data pertaining to a plurality of items procured in an enterprise, wherein the procurement data is collected in a predefined transaction window, and wherein the procurement data comprises a plurality of features associated with each of the plurality of items. Further, the the one or more hardware processors are configured by the programmed instructions to identify an influence value, associated with each of the plurality of features pertaining to each of the plurality of items based on the procurement data using an influencer graph. Furthermore, one or more hardware processors are configured by the programmed instructions to identify a degree of impact corresponding to each of the plurality of features based on the influence value associated with each of the plurality of items. Furthermore, the one or more hardware processors are configured by the programmed instructions to identify a plurality of highly influential features from among the plurality of features based on an associated degree of impact and a procurement seasonal data using the influencer graph. Furthermore, the one or more hardware processors are configured by the programmed instructions to identify a seasonal behaviour associated with each of the plurality of items based on the plurality of highly influential features and the transaction data. Furthermore, the one or more hardware processors are configured by the programmed instructions to obtain a plurality of price anomalies associated with each of the plurality of items by comparing a current seasonal price associated with each of the plurality of items with an associated historical price. Furthermore, the one or more hardware processors are configured by the programmed instructions to identify a plurality of candidate clustering algorithms from a plurality of clustering algorithms based on a count and a pattern associated with the plurality of price anomalies. Furthermore, the one or more hardware processors are configured by the programmed instructions to cluster the plurality of items into a plurality of clusters based on the price using the plurality of candidate clustering algorithms. Furthermore, the one or more hardware processors are configured by the programmed instructions to identify an optimal cluster from among the plurality of clusters based on a silhouette score associated with each of the plurality of candidate clustering algorithms. Furthermore, the one or more hardware processors are configured by the programmed instructions to identify a plurality of anomalous transaction clusters by comparing a base line purchase value with the identified optimal cluster using decision trees. Furthermore, the one or more hardware processors are configured by the programmed instructions to identify a plurality of reasons associated with the identified anomalous transaction clusters based on maverick transactions using the decision trees. Finally, the one or more hardware processors are configured by the programmed instructions to recommend an alternate buying options for a future procurement order based on the identified plurality of reasons.

In yet another aspect, a computer program product including a non-transitory computer-readable medium having embodied therein a computer program for anomalous price variance based recommendation of alternate buying options is provided. The computer readable program, when executed on a computing device, causes the computing device to receive a procurement data pertaining to a plurality of items procured in an enterprise, wherein the procurement data is collected in a predefined transaction window, and wherein the procurement data comprises a plurality of features associated with each of the plurality of items. Further, the computer readable program, when executed on a computing device, causes the computing device to identify an influence value, associated with each of the plurality of features pertaining to each of the plurality of items based on the procurement data using an influencer graph. Furthermore, computer readable program, when executed on a computing device, causes the computing device to identify a degree of impact corresponding to each of the plurality of features based on the influence value associated with each of the plurality of items. Furthermore, the computer readable program, when executed on a computing device, causes the computing device to identify a plurality of highly influential features from among the plurality of features based on an associated degree of impact and a procurement seasonal data using the influencer graph. Furthermore, the computer readable program, when executed on a computing device, causes the computing device to identify a seasonal behaviour associated with each of the plurality of items based on the plurality of highly influential features and the transaction data. Furthermore, the computer readable program, when executed on a computing device, causes the computing device to obtain a plurality of price anomalies associated with each of the plurality of items by comparing a current seasonal price associated with each of the plurality of items with an associated historical price. Furthermore, the computer readable program, when executed on a computing device, causes the computing device to identify a plurality of candidate clustering algorithms from a plurality of clustering algorithms based on a count and a pattern associated with the plurality of price anomalies. Furthermore, the computer readable program, when executed on a computing device, causes the computing device to cluster the plurality of items into a plurality of clusters based on the price using the plurality of candidate clustering algorithms. Furthermore, the computer readable program, when executed on a computing device, causes the computing device to identify an optimal cluster from among the plurality of clusters based on a silhouette score associated with each of the plurality of candidate clustering algorithms. Furthermore, the computer readable program, when executed on a computing device, causes the computing device to identify a plurality of anomalous transaction clusters by comparing a base line purchase value with the identified optimal cluster using decision trees. Furthermore, the computer readable program, when executed on a computing device, causes the computing device to identify a plurality of reasons associated with the identified anomalous transaction clusters based on maverick transactions using the decision trees. Finally, the computer readable program, when executed on a computing device, causes the computing device to recommend an alternate buying options for a future procurement order based on the identified plurality of reasons.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for anomalous price variance based recommendation of alternate buying options, in accordance with some embodiments of the present disclosure.
FIG. 1B illustrates a broad level functional architecture of the system for anomalous price variance based recommendation of alternate buying options, in accordance with some embodiments of the present disclosure.
FIG. 2A and FIG. 2B (also referred to as FIG. 2) illustrate a flow diagram for a processor implemented method for anomalous price variance based recommendation of alternate buying options, in accordance with some embodiments of the present disclosure.
FIG. 3 illustrates an example data influencer graph for the processor implemented method for anomalous price variance based recommendation of alternate buying options, in accordance with some embodiments of the present disclosure.

DETAILED DESCRIPTION OF EMBODIMENTS

Exemplary embodiments are described with reference to the accompanying drawings. In the figures, the leftmost digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There are some commonly known procurement risks, like inaccurate need analysis, inadequate vendor management and sourcing, no supply chain risk management, underdeveloped contract management process, lack of automation and poor procurement planning. One of the biggest challenges that the procure-to-pay domain faces is the purchase of items at sub-optimal price. This could either be a result of intentional practices (for example, procurement frauds) by gaming the system or simply due to the absence of sophisticated methodologies to derive the optimal price. As a result, the organizations face considerable loss with respect to their annual revenue. Since the transactions are involved in large numbers, it becomes even more difficult to identify such procurement frauds. For example, some of the procurement frauds are payoffs and kickbacks, shell companies, bid rigging, credit card fraud, fraudulent invoices, and the like.

Conventional statistical tools and Business Intelligence (BI) tools provide analytics reports, however, in conventional methods, the analysis is done in silos and hence it lacks a comprehensive view of the core problems. Further, the conventional methods lack the domain knowledge of procure-to-pay and hence do not generate domain-specific insights. Furthermore, the conventional methods only provide observations but do not generate actionable recommendations. Finally, conventional methods are predominantly reactive and neither predictive nor perspective. Hence there is a challenge in developing a predictive model considering a comprehensive view of the core problems and domain specific insights.

To overcome the challenges of the conventional approaches, embodiments herein provide a method and system for anomalous price variance based recommendation of alternate buying options. The present disclosure aims to solve the problem of spend optimization by detecting, diagnosing, predicting, and preventing such anomalous transactions in procure-to-pay processes. The present disclosure provides a recommendation engine which generated a set of optimal price recommendations across different scenarios, which was an outcome of both the derived insights and domain knowledge. Initially, the system receives procurement data pertaining to an enterprise and identifies influence values of product features. Further degree of impact of features are identified and highly influential features are identified based on that. Further, seasonal behaviors are identified, and price anomalies are identified based on that. Further, a plurality of candidate clustering algorithms are identified for clustering the plurality of products/items. Further, an optimal cluster is identified based on a silhouette score associated with each of the plurality of candidate clustering algorithms. Further, anomalous transaction clusters are identified by comparing the base line purchase value with identified optimal cluster using decision trees. Further, a plurality of reasons associated with the identified anomalous transaction clusters are identified based on maverick transactions using decision trees; and an alternate buying option is recommended for a new procurement order based on the identified plurality of reasons.

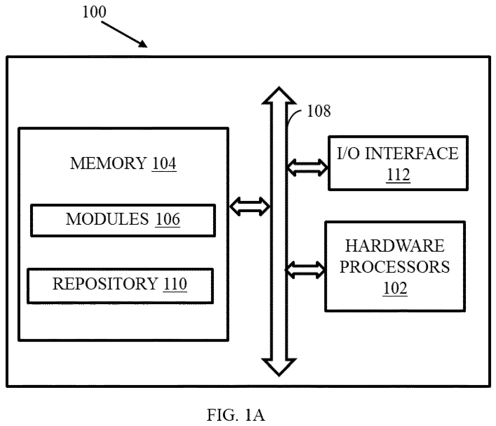

Referring now to the drawings, and more particularly to FIG. 1A through FIG. 3, where similar reference characters denote corresponding features consistently throughout the figures, there are shown preferred embodiments, and these embodiments are described in the context of the following exemplary system and/or method.

FIG. 1A is a functional block diagram of a system 100 for anomalous price variance based recommendation of alternate buying options, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

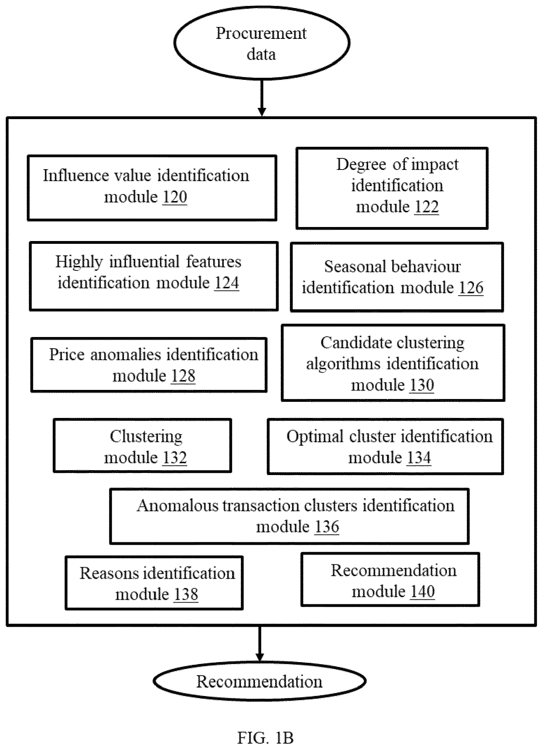

The plurality of modules 106 includes programs or coded instructions that supplement applications or functions performed by the system 100 for anomalous price variance based recommendation of alternate buying options. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for anomalous price variance based recommendation of alternate buying options. For example, the plurality of modules includes a influence value identification module 120 (shown in FIG. 1B), a degree of impact identification module 122 (shown in FIG. 1B), a highly influential features identification module 124 (shown in FIG. 1B), a seasonal behaviour identification module 126 (shown in FIG. 1B), a price anomalies identification module 128 (shown in FIG. 1B), a candidate clustering algorithms identification module 130 (shown in FIG. 1B), a clustering module 132 (shown in FIG. 1B), a candidate clustering algorithms identification module 134 (shown in FIG. 1B), an anomalous transaction clusters identification module 136 (shown in FIG. 1B), a reasons identification module 138 (shown in FIG. 1B) and a recommendation module 140 (shown in FIG. 1B).

FIG. 1B illustrates a broad level functional architecture for a processor implemented method for anomalous price variance based recommendation of alternate buying options, in accordance with some embodiments of the present disclosure.

The data repository (or repository) 110 may include a plurality of abstracted pieces of code for refinement and data that is processed, received, or generated as a result of the execution of the plurality of modules in the module(s) 106.

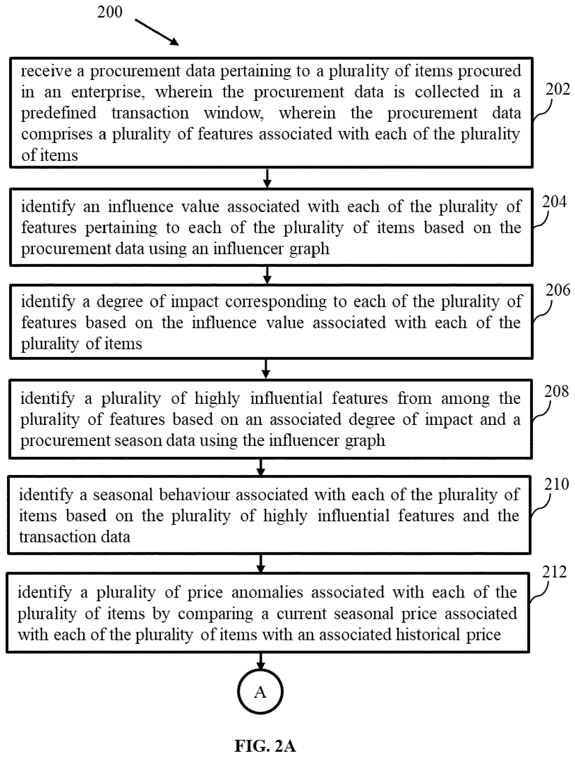

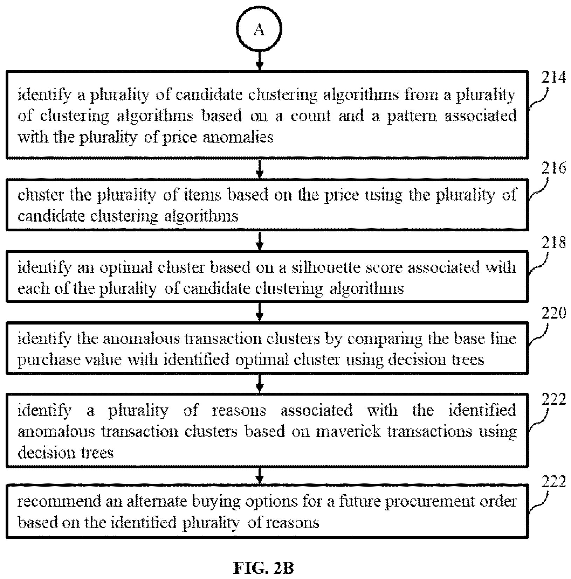

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for anomalous price variance based recommendation of alternate buying options implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, one or more hardware processors 102 are configured by the programmed instructions to receive a procurement data pertaining to a plurality of items procured in an enterprise, wherein the procurement data is collected in a predefined transaction window, wherein the procurement data comprises a plurality of features associated with each of the plurality of items. For example, the plurality of features includes vendor name, payment terms, quantity, geography.

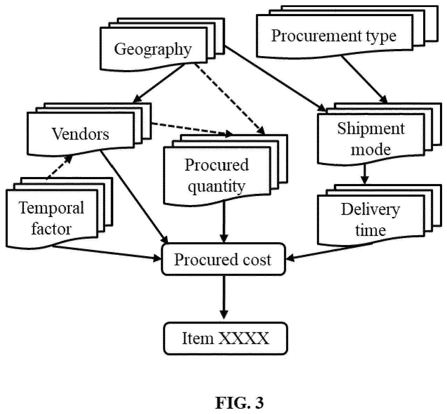

At step 204 of the method 200, the influence value identification module 120 when executed by the one or more hardware processors 102 are configured by the programmed instructions to identify an influence value associated with each of the plurality of features pertaining to each of the plurality of items based on the procurement data using an influencer graph. The influencer value is nothing but the impact of change in one value to the change in other value and is identified using various statistical measures. For example, the influencer graph is shown in FIG. 3 includes multiple features and the edges between them represent the influence. For example, now referring to FIG. 3, geography impacts vendors procured quantity, and shipment mode. Procurement cost is a function of temporal factors such as Day of Week, Hour of Day etc. quantity, vendors used and delivery time.

At step 206 of the method 200, the degree of impact identification module 122, when executed by the one or more hardware processors 102 are configured by the programmed instructions to identify a degree of impact corresponding to each of the plurality of features based on the influence value associated with each of the plurality of items. For example, price per unit of an item generally reduces increase in quantity, or seasons have an impact on price of most vegetables and food grains.

At step 208 of the method 200, the highly influential features identification module 124 when executed by the one or more hardware processors 102 are configured by the programmed instructions to identify a plurality of highly influential features from among the plurality of features based on an associated degree of impact and a procurement seasonal data using influencer graph. For example, some of the features influencing the price of the plurality of items based on a plurality of transactions are purchase order, vendor name, business unit name, purchase order plant name, purchase order plant country and quantity. The procurement seasonal data includes data associated with one or more procurement season.

At step 210 of the method 200, the seasonal behaviour identification module 126 when executed by the one or more hardware processors 102 are configured by the programmed instructions to identify a seasonal behaviour associated with each of the plurality of items based on the plurality of highly influential features and the transaction data.

The steps for identifying the seasonal behaviour associated with each of the plurality of procured items based on the plurality of highly influential features and the transaction data includes the following steps. Initially, a plurality of product categories are obtained by categorizing each of the plurality of items based on an item type. Post categorizing, an influencer item is identified for each of the plurality categories based on their impact on price value associated with the plurality of items. Further, a relationship between the influencer item associated with each of the plurality of categories is obtained. Finally, a plurality of contextual features associated with each of the plurality of items are identified by analysing the pattern of the captured relationship using piecewise multi-variate regression model, wherein the plurality of contextual features comprises at least one of a) a current seasonal behavior b) a current seasonal price and c) a baseline purchase value.

At step 212 of the method 200, the price anomalies identification module 128 when executed by the one or more hardware processors 102 are configured by the programmed instructions to obtain a plurality of price anomalies associated with each of the plurality of items by comparing the current seasonal price associated with each of the plurality of items and an associated historical price.

At step 214 of the method 200, the candidate clustering algorithms identification module 130 when executed by the one or more hardware processors 102 are configured by the programmed instructions to identify a plurality of candidate clustering algorithms from among a plurality of clustering algorithms based on a count and a pattern associated with the plurality of price anomalies. For example, the plurality of clustering algorithms includes K-means clustering algorithm, Hierarchal clustering algorithm, DBSCAN (Density based spatial clustering of applications with Noise) clustering and Gaussian models.

For example, the price-quantity agreement in the procure-to-pay domain is driven by various external factors and attributes. The procurement data generally contains hidden information, relationship, and patterns, which if ignored can lead to discrepancy in the analysis. To ensure that all the relevant factors are taken into consideration, the present disclosure created an ensemble of algorithms that could intelligently select the right algorithm at different stages of the analysis, depending on the behavior of attributes, and generate useful insights. Formula used to identify best clusters is given in equation (1).

$$s(o) = \frac{b(o) - a(o)}{max(a(o), b(o)\}} \quad \dots\dots\dots\dots\dots\dots\dots\dots(1)$$

where, $s(o)$ is the silhouette coefficient of the data point **o,** $a(o)$ is the *average distance* between **o** and all the other data points in the cluster to which **o** belongs, $b(o)$ is the *minimum average distance* from **o** to all clusters to which **o** does not belong.

At step 216 of the method 200, the clustering module 132 when executed by the one or more hardware processors 102 are configured by the programmed instructions to cluster the plurality of items into a plurality of clusters based on the price using the plurality of candidate clustering algorithms.

At step 218 of the method 200, the optimal cluster identification module 134 when executed by the one or more hardware processors 102 are configured by the programmed instructions to identify an optimal cluster from among the plurality of clusters based on a silhouette score associated with each of the plurality of candidate clustering algorithms.

At step 220 of the method 200, the anomalous transaction clusters identification module 136 when executed by the one or more hardware processors 102 are configured by the programmed instructions to identify a plurality of anomalous transaction clusters by comparing a base line purchase value with the identified optimal cluster using decision trees. For example, the per unit cost of an item that was paid on a previous purchase is known as baseline unit cost.

At step 222 of the method 200, the reasons identification computation module 138 when executed by the one or more hardware processors 102 are configured by the programmed instructions to identify a plurality of reasons associated with the identified anomalous transaction clusters based on maverick transactions using decision trees.

At step 224 of the method 200, the recommendation computation module 140 when executed by the one or more hardware processors 102 are configured by the programmed instructions to recommend an alternate buying options for a future procurement order based on the identified plurality of reasons. For example, in certain quantities, vendor 1 might give a better price then vendor 2, but in higher quantities vendor 1 is a better option. Or in some months vendor 3 gives the best price.

**Experimentation:** The present disclosure was tested on multiple Purchase Orders (POs) in the domain of supply chain management. For example, 64854 Pos are analyzed and detected 3044 POs with anomalous price variance. Further, the present disclosure provided 159 recommendations leading to a saving potential of 3,44,81,099 USD.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of anomalous price variance based recommendation of alternate buying options. The present disclosure built a layer of intelligence to automatically select the right algorithm that self-tunes and self-learns. Further, the present disclosure provides a domain-aware solution by customizing the traditional algorithms for anomaly detection, spend optimization and recommendations. Customizing these enriched the present disclosure in two-folds (i) It factored the role of domain specific attributes to ensure that the derived insights are relevant (ii) The generated insights were woven together to provide user with an end-to-end solution starting from identifying anomalies in the estate to generating actionable recommendation to rectify them. Furthermore, the present disclosure provides a recommendation engine customized to the procure-to-pay process and adapt it based on user-feedback.

It is to be understood that the scope of the protection is extended to such a program and in addition to a computer-readable means having a message therein such computer-readable storage means contain program-code means for

## EP 4 617 972 A1

implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

### Claims

1. A processor-implemented method (200), the method comprising:

   receiving (202), by one or more hardware processors, a procurement data pertaining to a plurality of items procured in an enterprise, wherein the procurement data is collected in a predefined transaction window, and wherein the procurement data comprises a plurality of features associated with each of the plurality of items;
   identifying (204), by the one or more hardware processors, an influence value, associated with each of the plurality of features pertaining to each of the plurality of items based on the procurement data using an influencer graph;
   identifying (206), by the one or more hardware processors, a degree of impact corresponding to each of the plurality of features based on the influence value associated with each of the plurality of items;
   identifying (208), by the one or more hardware processors, a plurality of highly influential features from among the plurality of features based on an associated degree of impact and a procurement seasonal data using the influencer graph;
   identifying (210), by the one or more hardware processors, a seasonal behaviour associated with each of the plurality of items based on the plurality of highly influential features and the transaction data;
   obtaining (212), by the one or more hardware processors, a plurality of price anomalies associated with each of the plurality of items by comparing a current seasonal price associated with each of the plurality of items with an associated historical price;
   identifying (214), by the one or more hardware processors, a plurality of candidate clustering algorithms from a plurality of clustering algorithms based on a count and a pattern associated with the plurality of price anomalies;

clustering (216), by the one or more hardware processors, the plurality of items into a plurality of clusters based on the price using the plurality of candidate clustering algorithms;

identifying (218), by the one or more hardware processors, an optimal cluster from among the plurality of clusters based on a silhouette score associated with each of the plurality of candidate clustering algorithms;

identifying (220), by the one or more hardware processors, a plurality of anomalous transaction clusters by comparing a base line purchase value with the identified optimal cluster using decision trees;

identifying (222), by the one or more hardware processors, a plurality of reasons associated with the identified anomalous transaction clusters based on maverick transactions using the decision trees; and

recommending (224), by the one or more hardware processors, an alternate buying options for a future procurement order based on the identified plurality of reasons.

2. The processor-implemented method as claimed in claim 1, wherein steps for identifying the seasonal behaviour associated with each of the plurality of procured items based on the plurality of highly influential features and the transaction data comprises:

obtaining a plurality of product categories by categorizing each of the plurality of items based on item type;

identifying an influencer for each of the plurality categories based on the impact of price value on cost attribute;

capturing a relationship between influencers associated with each of the plurality of categories; and

identifying a plurality of contextual features associated with each of the plurality of items by analysing the pattern of the captured relationship using piecewise multi-variate regression model, wherein the plurality of contextual features comprises at least one of a) a current seasonal behavior b) a current seasonal price and c) a baseline purchase value.

3. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a procurement data pertaining to a plurality of items procured in an enterprise, wherein the procurement data is collected in a predefined transaction window, and wherein the procurement data comprises a plurality of features associated with each of the plurality of items;

identify an influence value, associated with each of the plurality of features pertaining to each of the plurality of items based on the procurement data using an influencer graph;

identify a degree of impact corresponding to each of the plurality of features based on the influence value associated with each of the plurality of items;

identify a plurality of highly influential features from among the plurality of features based on an associated degree of impact and a procurement seasonal data using the influencer graph;

identify a seasonal behaviour associated with each of the plurality of items based on the plurality of highly influential features and the transaction data;

obtain a plurality of price anomalies associated with each of the plurality of items by comparing a current seasonal price associated with each of the plurality of items with an associated historical price;

identify a plurality of candidate clustering algorithms from a plurality of clustering algorithms based on a count and a pattern associated with the plurality of price anomalies;

cluster the plurality of items into a plurality of clusters based on the price using the plurality of candidate clustering algorithms;

identify an optimal cluster from among the plurality of clusters based on a silhouette score associated with each of the plurality of candidate clustering algorithms;

identify a plurality of anomalous transaction clusters by comparing a base line purchase value with the identified optimal cluster using decision trees;

identify a plurality of reasons associated with the identified anomalous transaction clusters based on maverick transactions using the decision trees; and

recommend an alternate buying options for a future procurement order based on the identified plurality of reasons.

4. The system as claimed in claim 3, wherein steps for identifying the seasonal behaviour associated with each of the plurality of procured items based on the plurality of highly influential features and the transaction data comprises:

obtaining a plurality of product categories by categorizing each of the plurality of items based on item type;

identifying an influencer for each of the plurality categories based on the impact of price value on cost attribute;

capturing a relationship between influencers associated with each of the plurality of categories; and

identifying a plurality of contextual features associated with each of the plurality of items by analysing the pattern of the captured relationship using piecewise multi-variate regression model, wherein the plurality of contextual features comprises at least one of a) a current seasonal behavior b) a current seasonal price and c) a baseline purchase value.

5.  One or more non-transitory machine-readable information storage mediums comprising one or more instructions which when executed by one or more hardware processors cause:

receiving a procurement data pertaining to a plurality of items procured in an enterprise, wherein the procurement data is collected in a predefined transaction window, and wherein the procurement data comprises a plurality of features associated with each of the plurality of items;

identifying an influence value, associated with each of the plurality of features pertaining to each of the plurality of items based on the procurement data using an influencer graph;

identifying a degree of impact corresponding to each of the plurality of features based on the influence value associated with each of the plurality of items;

identifying a plurality of highly influential features from among the plurality of features based on an associated degree of impact and a procurement seasonal data using the influencer graph;

identifying a seasonal behaviour associated with each of the plurality of items based on the plurality of highly influential features and the transaction data;

obtaining a plurality of price anomalies associated with each of the plurality of items by comparing a current seasonal price associated with each of the plurality of items with an associated historical price;

identifying a plurality of candidate clustering algorithms from a plurality of clustering algorithms based on a count and a pattern associated with the plurality of price anomalies;

clustering the plurality of items into a plurality of clusters based on the price using the plurality of candidate clustering algorithms;

identifying an optimal cluster from among the plurality of clusters based on a silhouette score associated with each of the plurality of candidate clustering algorithms;

identifying a plurality of anomalous transaction clusters by comparing a base line purchase value with the identified optimal cluster using decision trees;

identifying a plurality of reasons associated with the identified anomalous transaction clusters based on maverick transactions using the decision trees; and

recommend an alternate buying options for a future procurement order based on the identified plurality of reasons.

6.  The one or more non-transitory machine-readable information storage mediums as claimed in claim 5, wherein steps for identifying the seasonal behaviour associated with each of the plurality of procured items based on the plurality of highly influential features and the transaction data comprises:

obtaining a plurality of product categories by categorizing each of the plurality of items based on item type;

identifying an influencer for each of the plurality categories based on the impact of price value on cost attribute;

capturing a relationship between influencers associated with each of the plurality of categories; and

identifying a plurality of contextual features associated with each of the plurality of items by analysing the pattern of the captured relationship using piecewise multi-variate regression model, wherein the plurality of contextual features comprises at least one of a) a current seasonal behavior b) a current seasonal price and c) a baseline purchase value.

100

MEMORY 104

MODULES 106

REPOSITORY 110

108

I/O INTERFACE
112

HARDWARE
PROCESSORS
102

FIG. 1A

FIG. 1B

200

receive a procurement data pertaining to a plurality of items procured in an enterprise, wherein the procurement data is collected in a predefined transaction window, wherein the procurement data comprises a plurality of features associated with each of the plurality of items — 202

identify an influence value associated with each of the plurality of features pertaining to each of the plurality of items based on the procurement data using an influencer graph — 204

identify a degree of impact corresponding to each of the plurality of features based on the influence value associated with each of the plurality of items — 206

identify a plurality of highly influential features from among the plurality of features based on an associated degree of impact and a procurement season data using the influencer graph — 208

identify a seasonal behaviour associated with each of the plurality of items based on the plurality of highly influential features and the transaction data — 210

identify a plurality of price anomalies associated with each of the plurality of items by comparing a current seasonal price associated with each of the plurality of items with an associated historical price — 212

A

**FIG. 2A**

A

identify a plurality of candidate clustering algorithms from a plurality of clustering algorithms based on a count and a pattern associated with the plurality of price anomalies
214

cluster the plurality of items based on the price using the plurality of candidate clustering algorithms
216

identify an optimal cluster based on a silhouette score associated with each of the plurality of candidate clustering algorithms
218

identify the anomalous transaction clusters by comparing the base line purchase value with identified optimal cluster using decision trees
220

identify a plurality of reasons associated with the identified anomalous transaction clusters based on maverick transactions using decision trees
222

recommend an alternate buying options for a future procurement order based on the identified plurality of reasons
222

**FIG. 2B**

EP 4 617 972 A1

FIG. 3

15

Europäisches
Patentamt

European
Patent Office

Office européen
des brevets

# EUROPEAN SEARCH REPORT

**Application Number**

EP 24 18 4946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PRIYADARSHI ET AL: "Mining Mavericks - A data-driven approach to detect spend leakage", 2021 IEEE 8TH INTERNATIONAL CONFERENCE ON DATA SCIENCE AND ADVANCED ANALYTICS (DSAA), IEEE, 6 October 2021 (2021-10-06), pages 1-2, XP033991471, DOI: 10.1109/DSAA53316.2021.9564194 [retrieved on 2021-10-07] * abstract * * sections I-IV * | 1-6 | INV. G06Q10/087 G06Q30/0201 |
| Y | US 7 792 770 B1 (PHOHA VIR V [US] ET AL) 7 September 2010 (2010-09-07) * abstract * * column 4, line 54 - column 5, line 25 * * column 6, line 11 - column 19, line 6 * * figures 1-13 * | 1-6 | |
| A | KUMAR M MANOJ ET AL: "Driving E-commerce Success with Advanced Machine Learning: Customer Purchase Pattern Insights", 2023 INTERNATIONAL CONFERENCE ON SUSTAINABLE COMMUNICATION NETWORKS AND APPLICATION (ICSCNA), IEEE, 15 November 2023 (2023-11-15), pages 1196-1203, XP034498343, DOI: 10.1109/ICSCNA58489.2023.10370205 [retrieved on 2024-01-01] * abstract * * sections IV-VI * | 1-6 | **TECHNICAL FIELDS SEARCHED (IPC)** G06Q |

-/--

The present search report has been drawn up for all claims

| Place of search | Date of completion of the search | Examiner |
|---|---|---|
| Munich | 9 December 2024 | Körbler, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/206261 A1 (CELLA CHARLES HOWARD [US] ET AL) 29 June 2023 (2023-06-29)<br>* abstract *<br>* paragraph [0651] - paragraph [0664] *<br>* paragraph [1138] *<br>* paragraph [2045] *<br>* paragraph [3170] *<br>* figures 1-331 * | 1-6 | |

- - - - -

TECHNICAL FIELDS
SEARCHED    (IPC)

The present search report has been drawn up for all claims

| Place of search | Date of completion of the search | Examiner |
|---|---|---|
| Munich | 9 December 2024 | Körbler, Günther |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 4946

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2024

| Patent document cited in search report | | Publication date | Patent family member(s) | | Publication date |
|---|---|---|---|---|---|
| US 7792770 | B1 | 07-09-2010 | NONE | | |
| US 2023206261 | A1 | 29-06-2023 | AU | 2022396273 A1 | 30-05-2024 |
| | | | CA | 3238747 A1 | 01-06-2023 |
| | | | EP | 4437485 A2 | 02-10-2024 |
| | | | US | 2023206261 A1 | 29-06-2023 |
| | | | US | 2023206329 A1 | 29-06-2023 |
| | | | US | 2023316075 A1 | 05-10-2023 |
| | | | US | 2023316305 A1 | 05-10-2023 |
| | | | US | 2023316357 A1 | 05-10-2023 |
| | | | US | 2023325720 A1 | 12-10-2023 |
| | | | US | 2023325811 A1 | 12-10-2023 |
| | | | US | 2023325816 A1 | 12-10-2023 |
| | | | US | 2023325829 A1 | 12-10-2023 |
| | | | US | 2023342346 A1 | 26-10-2023 |
| | | | US | 2023351292 A1 | 02-11-2023 |
| | | | US | 2023351371 A1 | 02-11-2023 |
| | | | US | 2023351393 A1 | 02-11-2023 |
| | | | US | 2023410090 A1 | 21-12-2023 |
| | | | US | 2023410093 A1 | 21-12-2023 |
| | | | US | 2023410095 A1 | 21-12-2023 |
| | | | US | 2023419277 A1 | 28-12-2023 |
| | | | WO | 2023097026 A2 | 01-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421019332